# FASCICULE DE BREVET EUROPEEN

(11) **EP 3 805 723 B1**
(45) Date de publication et mention de la délivrance du brevet: **13.04.2022**
(21) Numéro de dépôt: 20199832.5
(22) Date de dépôt: 02.10.2020
(51) Int. Cl.: G01M 3/24, F16J 15/10

(54) **DISPOSITIF DE CONTRÔLE DE L'ÉTANCHÉITÉ D'UN PANNEAU DE VÉHICULE AUTOMOBILE À DOUBLE PAROI**
VORRICHTUNG ZUR DICHTHEITSKONTROLLE EINES DOPPELWANDIGEN KRAFTFAHRZEUGPANEELS
DEVICE FOR CHECKING THE SEAL OF A PANEL OF A MOTOR VEHICLE WITH DOUBLE WALL

(30) Priorité: 07.10.2019 FR 1911107
(43) Date de publication de la demande: 14.04.2021
(73) Titulaire: Compagnie Plastic Omnium SE, 69007 Lyon (FR)
(72) Inventeur: VIRELIZIER, François, 01150 SAINTE-JULIE (FR); BRIZIN, Jérôme, 01150 SAINTE-JULIE (FR); STUMPP, Eric, 01150 SAINTE-JULIE (FR); TRESSE, David, 01150 SAINTE-JULIE (FR)
(74) Mandataire: LLR

(56) Documents cités:
- WO-A2-2007/068941
- CH-A- 215 694
- CN-A- 105 738 046
- DE-A1- 4 237 527
- FR-A1- 2 301 817
- FR-A1- 2 349 771
- US-A1- 2003 178 792
- US-A1- 2013 031 961

## Description

L'invention concerne le domaine général du contrôle de l'étanchéité d'un assemblage collé de pièces de véhicule automobile.

Plus particulièrement, elle concerne un dispositif de contrôle de l'étanchéité d'un panneau de carrosserie de véhicule automobile constitué de deux parois en plastique collées entre elles. Un tel panneau peut être un ouvrant arrière (hayon) ou latéral (porte), avant (capot) ou un becquet aérodynamique.

À l'heure actuelle, par exemple, les hayons de véhicule automobile comprennent le plus souvent un caisson, formant la paroi interne du panneau, composé d'une partie inférieure d'une partie supérieure, ainsi qu'une ou plusieurs peaux de carrosserie venant recouvrant les parties du caisson, qui forment la paroi externe du panneau. L'ensemble composé du caisson et de la ou des peaux de carrosserie est appelée panneau de hayon.

De façon générale, ladite au moins une peau de carrosserie est rapportée par collage sur la partie du caisson concernée : la peau et la partie du caisson comprennent à cet effet chacun une piste de collage continue en regard l'une de l'autre. La présence de la colle permet non seulement d'assembler la peau de carrosserie à la partie du caisson, mais forme également un joint d'étanchéité entre ces deux éléments, et donc du panneau.

Une fois la peau de carrosserie rapportée et collée sur la partie du caisson, il est nécessaire de contrôler l'étanchéité d'un tel assemblage, et donc l'intégrité du joint d'étanchéité formé par le joint de colle. On entend ici par intégrité la capacité du joint d'étanchéité à assurer sa fonction d'étanchéité. Une baisse d'intégrité, ou défaut d'étanchéité, peut avoir différentes causes, telles qu'un joint endommagé ou mal positionné sur la piste de collage, un mauvais positionnement de la peau sur la partie du caisson, un plaquage insuffisant de la peau sur la partie du caisson mal réalisé, etc.

Pour contrôler l'intégrité du joint d'étanchéité formé par le joint de colle, on procède en général à une mise sous pression d'air du panneau suivie d'une détection d'un éventuel différentiel de pression entre d'une part, le volume situé entre la partie du caisson et la peau de carrosserie ainsi assemblés et, d'autre part, l'extérieur de la structure. Un tel différentiel signale un défaut d'étanchéité, ou perte d'intégrité, du joint d'étanchéité formé par le joint de colle. Pour localiser le défaut, il est de plus possible d'appliquer le long du joint de colle un produit révélateur de fuite d'air.

Pour mettre en œuvre un tel procédé de contrôle de l'intégrité du joint d'étanchéité entre la partie du caisson de hayon et la peau de carrosserie, il est connu de l'art antérieur d'utiliser un équipement composé d'un bâti accueillant la partie du caisson de hayon et un dispositif de mise sous pression d'air, ainsi qu'une ou plusieurs cloches de bridage en compression venant recouvrir les trous de la peau. La partie du caisson est ainsi plaquée sur le bâti, ce qui permet d'obturer les trous de la partie du caisson sur des obturateurs.

En effet, la peau de carrosserie comporte en général au moins un, voire plusieurs orifices traversants. Dans le cas d'une peau de carrosserie recouvrant une partie inférieure d'un caisson de hayon, les orifices correspondent notamment à l'implantation d'un éclaireur de plaque de police, d'une commande d'ouverture du hayon ou d'un logement de feu de signalisation pour un hayon, et dans le cas d'une partie supérieure d'un caisson, à l'implantation d'un troisième feu stop pour un becquet, etc. Il est nécessaire d'obturer ces orifices durant le procédé de contrôle de l'étanchéité pour ne détecter que les éventuelles fuites dues à un défaut d'étanchéité localisé au niveau du seul joint de colle, et non l'évacuation naturelle de l'air par ces orifices.

La ou les cloches évoquées ci-dessus permettent de recouvrir ces trous en recouvrant l'intégralité de la peau de carrosserie et de compenser la surpression d'air appliquée dans le volume situé entre la partie du caisson et la peau du panneau de carrosserie. Ainsi, en cas de défaut d'étanchéité du joint de colle entre la partie du caisson et la peau, une baisse de pression est détectée.

La partie du caisson de carrosserie doit aussi être plaquée de façon étanche contre le bâti, car elle présente également des orifices destinés au passage de divers équipements comme des faisceaux électriques. En particulier, dans le cas où la partie du caisson est une partie du caisson est d'un hayon, elle comprend des orifices pour intégrer la serrure, des charnières etc. qu'il est également nécessaire d'obturer pour les raisons évoquées ci-dessus.

L'équipement de contrôle évoqué ci-avant présente de nombreux inconvénients. En premier lieu, il est particulièrement imposant en termes de poids et de volume du fait de son fonctionnement sous pression d'air et de la robustesse des éléments de bridage à mettre en place pour réaliser l'étanchéité autour des divers orifices traversant la peau et la partie du caisson du panneau.

En outre, sa mise en place ainsi que son utilisation est longue et difficile pour un opérateur, ce qui la rend donc coûteuse et incompatible avec un contrôle de production plus systématique que par prélèvement statistique, à plus forte raison avec un contrôle unitaire (à 100%).

Enfin, du fait de la nécessité de provoquer une surpression à l'intérieur de la pièce assemblée, les efforts appliqués par la cloche de bridage sont particulièrement importants, ce qui endommage la pièce et la rend alors inutilisable sur véhicule. Les efforts de bridage ont en effet eux aussi pour conséquence d'abîmer le moyen de contrôle lui-même, notamment au niveau de ses joints.

Le document DE4237527 décrit un dispositif pour mesurer l'étanchéité de joints de porte de voiture en utilisant un microphone mesurant l'atténuation du son transmit de l'intérieur vers l'extérieur du véhicule. Le document WO2007/068941 décrit un dispositif qui fait de même pour tester l'étanchéité d'un pare-brise. Le document US2013/031961 décrit un dispositif qui teste l'étanchéité d'une culasse de voiture. Le document CN105738046 décrit un dispositif qui testé l'étanchéité d'une carcasse de voiture.

L'invention a notamment pour but de procurer un dispositif de contrôle de l'étanchéité du hayon qui soit moins encombrant, plus rapide et plus facile d'utilisation, ne l'endommage pas, tout en étant fiable.

À cet effet l'invention concerne un dispositif de contrôle de l'intégrité de l'étanchéité d'un joint de colle disposé entre une partie d'un caisson de carrosserie et une peau de carrosserie, la peau de carrosserie ou la partie du caisson comportant au moins un orifice traversant, dit orifice de peau, ou, respectivement, orifice de caisson, **caractérisé en ce qu'il** comprend au moins un couvercle à dépression destiné à recouvrir ledit au moins un orifice de peau, ou, respectivement ledit au moins un orifice de caisson, délimité par deux surfaces libres opposées, dites surface interne de couvercle et surface externe de couvercle, la surface interne de couvercle étant munie de deux joints d'étanchéité à contour fermé, dits respectivement joints de couvercle intérieur et extérieur, le contour du joint de couvercle intérieur étant contenu dans celui du joint de couvercle extérieur, le couvercle étant traversé par au moins un conduit d'aspiration débouchant, d'une part, entre les deux joints de couvercle du côté de la surface interne de couvercle et, d'autre part, du côté de la surface externe de couvercle.

Grâce au couvercle à dépression, il est possible de recouvrir facilement les orifices de la peau ou de caisson de façon étanche, sans avoir à utiliser un dispositif lourd et encombrant recouvrant l'intégralité de la peau de carrosserie ou du caisson de carrosserie. Il est en effet possible de recouvrir un ou plusieurs orifices par une pluralité de couvercles à dépression individuels, légers et de faibles dimensions, et d'isoler ces orifices de l'extérieur grâce aux joints de couvercle. On évite ainsi que ces orifices soient « confondus » par le dispositif de contrôle avec des défauts de l'intégrité du joint d'étanchéité.

Du fait de l'encombrement faible des couvercles à dépression, les disposer autour des orifices est chose aisée pour un opérateur. De plus, les couvercles à dépression agissant sur des zones de la peau de plus petite surface localisées autour d'un ou plusieurs orifices et exerçant une faible dépression localisée dans le volume compris entre le couvercle, la peau de carrosserie et les deux joints, les efforts qu'ils font subir à la peau de la carrosserie sont très limités. Ceci permet d'éviter un endommagement de la peau, du panneau de carrosserie et du dispositif de contrôle. De ce fait, si la pièce passe le contrôle d'étanchéité, autrement dit si l'on n'a détecté aucun défaut d'intégrité, elle peut poursuivre le cycle de production et être montée sur un véhicule.

De préférence, le dispositif de contrôle comprend un dispositif d'aspiration d'air relié au conduit d'aspiration du couvercle.

Afin de réaliser le contrôle de l'intégrité du joint d'étanchéité sans endommager l'ensemble formé par la partie du caisson de carrosserie et la peau de carrosserie, le dispositif de contrôle comprend en outre :
- un dispositif d'émission d'ondes sonores, telles que des ultrasons, configuré de sorte que les ondes sonores puissent se propager dans un volume situé entre la partie du caisson de carrosserie et la peau de carrosserie ; et
- un dispositif de détection des ondes sonores émises par le dispositif d'émission, destiné à être disposé à l'extérieur de l'ensemble formé par la peau de carrosserie et la partie du caisson de carrosserie.

De préférence, les ondes sonores sont des ultrasons, qui présentent l'avantage d'être peu influencées par le bruit régnant dans une usine et d'être facilement détectables, à l'aide d'un microphone par exemple.

De manière à sécuriser le positionnement de l'ensemble formé par la partie du caisson et la peau, le dispositif comprend en outre un bâti de maintien destiné à accueillir la partie du caisson ou la peau sur une de ses surfaces libres, dite surface de réception.

Selon un mode de réalisation préféré de l'invention, le bâti comprenant en outre une surface libre opposée à la surface de réception, dite surface externe, la surface de réception est munie de deux joints d'étanchéité à contour fermé, dits respectivement joints de bâti intérieur et extérieur, le contour du joint de bâti intérieur étant contenu dans celui du joint de bâti extérieur, le bâti étant traversé par au moins un conduit d'aspiration du bâti débouchant, d'une part, entre les deux joints de bâti du côté de la surface de réception du bâti et, d'autre part, du côté de la surface externe du bâti, le conduit étant en outre relié à un dispositif d'aspiration d'air.

Avantageusement, la partie du caisson de carrosserie ou la peau de carrosserie étant pourvu d'au moins un orifice traversant, les joints de bâti intérieur et extérieur sont configurés de sorte qu'une fois la partie du caisson de carrosserie ou la peau de carrosserie placée sur la surface de réception du bâti, le joint de bâti intérieur entoure l'orifice traversant, de sorte que sa projection orthogonale sur la surface de réception est contenue dans le contour du joint de bâti intérieur.

Ainsi, dans le cas où la partie du caisson de carrosserie ou la peau de carrosserie est pourvue d'orifices traversants, le bâti peut donc également, à l'instar du couvercle à dépression, contribuer à l'isolement de ces orifices qui pourraient être « confondus » par le dispositif de contrôle avec des défauts de l'intégrité du joint d'étanchéité.

De préférence, les joints de couvercle et/ou de bâti sont des joints à double lèvre, qui présentent l'avantage d'assurer l'étanchéité à l'air et à la propagation des ondes sonores.

L'invention concerne également un procédé de contrôle de l'intégrité d'un joint d'étanchéité reliant une partie d'un caisson de carrosserie et une peau de carrosserie, **caractérisé en ce qu'il** est mis en œuvre au moyen du dispositif de contrôle selon l'invention.

En particulier, le procédé de contrôle comprend les étapes suivantes :
- pose du couvercle sur la peau de carrosserie ou la partie du caisson de sorte qu'il recouvre ledit au moins un orifice de peau ou, respectivement, ledit au moins un orifice de caisson et que les joints de couvercle sont au contact de la peau de carrosserie ou, respectivement, de la partie du caisson,
- aspiration de l'air débouchant dans le conduit d'aspiration du couvercle à l'aide du dispositif d'aspiration.

Afin de simplifier le contrôle de l'intégrité du joint d'étanchéité et de s'assurer qu'il n'endommage pas l'ensemble formé par la partie du caisson de carrosserie et la peau de carrosserie, le procédé comprend de préférence les étapes suivantes :
- émission d'ondes sonores à l'aide du dispositif d'émission ;
- détection des ondes sonores émises par le dispositif d'émission à l'aide du dispositif de détection.

De préférence, les ondes sonores sont des ultrasons, qui présentent l'avantage de ne pas endommager l'ensemble formé par la partie du caisson de carrosserie et la peau de carrosserie et sont facilement détectables, à l'aide d'un microphone par exemple.

Selon un mode de réalisation particulier de l'invention, le procédé comprend en outre les étapes suivantes :
- pose de la partie du caisson de carrosserie ou de la peau sur le bâti de maintien de sorte que les joints de bâti sont en contact avec une surface libre de la partie du caisson de carrosserie, ou, respectivement, de la peau ;
- aspiration de l'air débouchant dans le conduit d'aspiration du bâti à l'aide du dispositif d'aspiration du bâti.

### Brève description des figures

L'invention sera mieux comprise à la lecture de la description qui va suivre donnée uniquement à titre d'exemple et faite en se référant aux dessins annexés dans lesquels :
[Fig. 1] La figure 1 est une vue en perspective d'un hayon de véhicule automobile en cours d'assemblage ;
[Fig. 2] La figure 2 est une vue en perspective éclatée du hayon de la figure 1 ;
[Fig. 3] La figure 3 est une vue selon la coupe III-III de la figure 2 ;
[Fig. 4] La figure 4 est une vue similaire à la figure 3 l'ensemble de caisson de hayon et de peau de hayon de la figure 1, illustrant de façon schématique un dispositif de contrôle de l'intégrité d'un joint d'étanchéité entre la partie du caisson de hayon et de peau de hayon selon un mode de réalisation particulier de l'invention ;
[Fig. 5] La figure 5 est une vue schématique en perspective d'un couvercle à dépression du dispositif de contrôle de la figure 4.

### Description détaillée

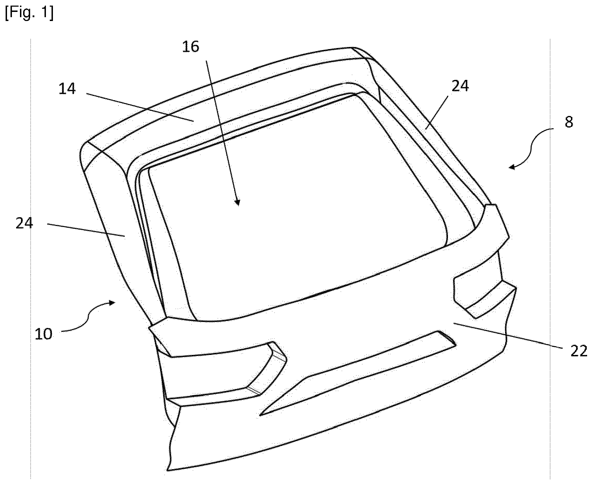

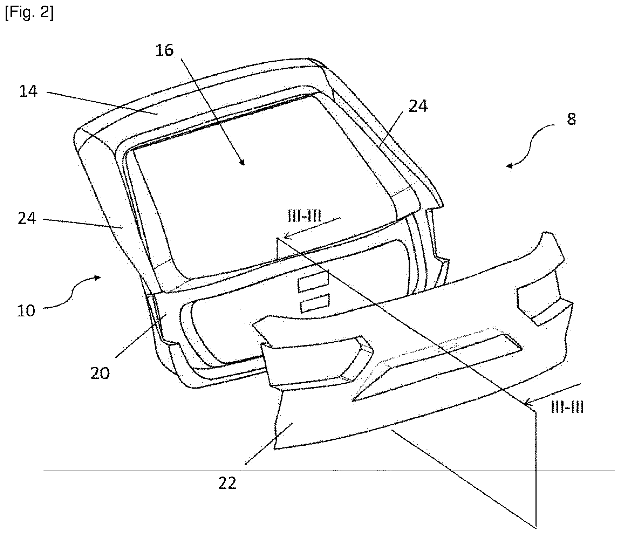

On a représenté sur les figures 1 et 2 un panneau de carrosserie de véhicule automobile 8 connu en soi de l'art antérieur, qui est en l'occurrence un panneau de hayon de véhicule automobile.

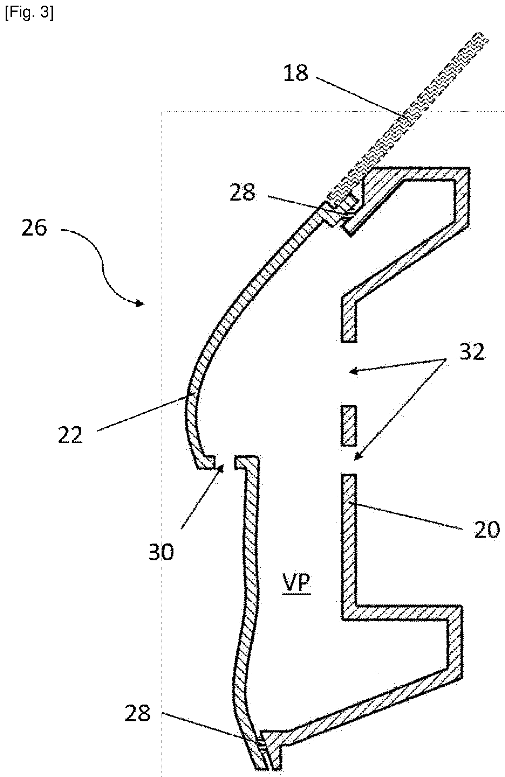

Le panneau de hayon 8 comprend un caisson 10 qui comprend une ouverture 16 du caisson pour accueillir une lunette 18 (représentée à la figure 3) destinée à être rapportée sur le caisson 10 par collage.

Plus précisément, le caisson 10 comprend une partie inférieure 20 située en-dessous de l'ouverture de lunette 16, reliée à une traverse supérieure 14 par deux montants latéraux 24 de la lunette.

Le caisson 10 est destiné à être recouvert par une ou plusieurs peaux de carrosserie 22 pour former le panneau de carrosserie. Comme on peut le voir à la figure 2, la partie inférieure du caisson 20 de hayon est ici recouverte d'une peau de carrosserie 22 rapporté sur le caisson 10 par collage.

La peau 22 et la partie inférieure du caisson 20 sont assemblés par un cordon de colle 28 continu disposé, là aussi de façon connue, sur une piste de collage continue située sur le pourtour de la partie inférieure du caisson 20. Le cordon de colle 28 constitue ici un joint d'étanchéité entre la peau 22 et la partie inférieure du caisson 20.

Comme on peut le voir à la figure 3 qui illustre la coupe III-III de la figure 2, la peau 22 est dans cet exemple munie d'au moins un orifice de peau 30 traversant destiné au passage de divers équipements, correspondant ici à une commande d'ouverture du hayon et un éclaireur de plaque d'immatriculation. L'orifice 30 traversant débouche dans le volume VP compris entre la peau 22 et la partie inférieure du caisson 20. Il en est de même pour la partie inférieure du caisson 20 qui comporte, dans le cas présent, deux orifices de caisson 32 destinés au passage de divers autres équipements, ici des faisceaux électriques.

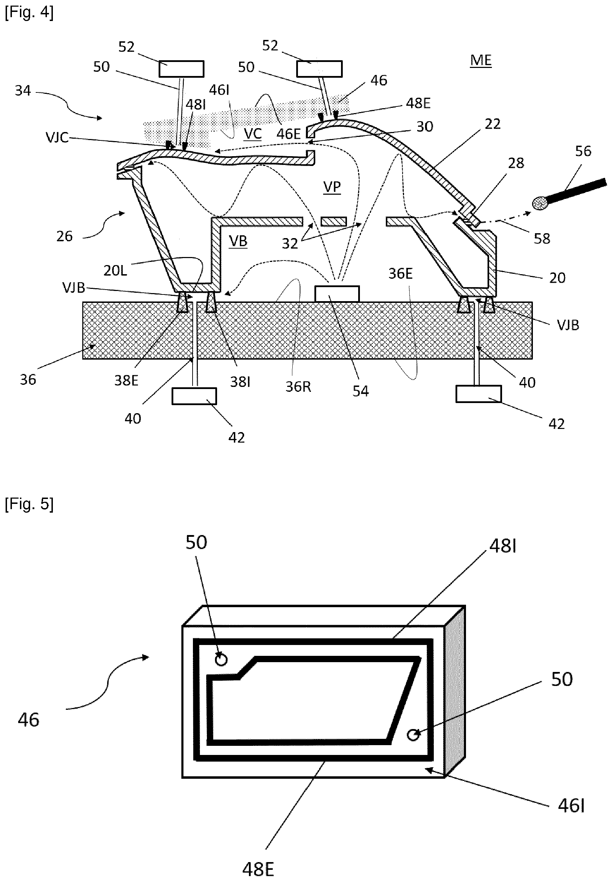

Pour contrôler l'intégrité du joint d'étanchéité constitué par le cordon de colle de l'ensemble 26 formé par la partie inférieure du caisson 20 et la peau 22, on utilise un dispositif de contrôle 34 d'étanchéité illustré schématiquement à la figure 4.

Le dispositif de contrôle 34 comprend un bâti de maintien 36 destiné à accueillir la partie inférieure du caisson 20 ou la peau 22. En l'occurrence, c'est la partie inférieure du caisson 20 qui repose sur le bâti 36, plus précisément sur une de ses surfaces libres, dite surface de réception 36R. Le bâti 36 comprend une surface libre opposée à la surface de réception, dite surface externe 36E.

En l'occurrence, et de préférence, la surface de réception 36R du bâti reçoit la surface libre 20L de la partie inférieure du caisson 20.

La surface de réception 36R est munie de deux joints d'étanchéité à contour fermé, dits respectivement joints de bâti intérieur 38I et extérieur 38E. De préférence, les joints de bâti intérieur et extérieur 38I, 38E sont logés dans des rainures pratiquées dans la surface de réception 36R, de sorte à être en saillie par rapport à la surface de réception 36R.

Le contour du joint de bâti intérieur 38I est contenu dans celui du joint de bâti extérieur 38E. Par exemple, les joints de bâti intérieur et extérieur 38I, 38E sont des joints à lèvre.

Les joints de bâti intérieur 38I et extérieur 38E sont placés sur la surface externe 36E de sorte à être en contact, une fois l'ensemble 26 formé par la partie inférieure du caisson 20 et la peau 22 disposé sur le bâti 36, avec la surface libre 20L.

Le bâti 36 est traversé par au moins un conduit d'aspiration 40 débouchant, d'une part, entre les deux joints de bâti 38I, 38E du côté de la surface de réception 36R du bâti et, d'autre part, du côté de la surface externe du bâti 36E. Le conduit d'aspiration 40 est en outre relié à des moyens d'aspiration 42 d'air du côté de la surface externe 36E du bâti.

Le conduit d'aspiration 40 débouche ainsi, du côté de la surface de réception 36R, sur un volume d'aspiration du joint de bâti VJB délimité, une fois le caisson disposé sur le bâti 36, par les joints de bâti 38I, 38E, la surface de réception 36R du bâti et la surface libre 20L du caisson.

Les joints de bâti intérieur et extérieur 38I, 38E sont configurés de sorte qu'une fois la partie inférieure du caisson 20 placée sur la surface de réception du bâti 36R, le joint de bâti intérieur 38I entoure l'orifice de caisson 32, de sorte que sa projection orthogonale sur la surface de réception 36R est contenue dans le contour du joint de bâti intérieur 38I.

Comme on le verra plus loin, lors de l'utilisation du dispositif de contrôle 34, les moyens d'aspiration 42 du bâti permettent d'aspirer l'air contenu dans le volume d'aspiration du joint de bâti VJB. Ceci permet de maintenir la partie inférieure du caisson 20 plaquée de façon étanche contre le bâti 36 sans avoir à exercer une forte puissance d'aspiration. Les moyens d'aspiration 42 peuvent être des moyens d'aspiration classiques, connus de l'homme du métier et ne sont donc ici pas décrits.

Grâce à l'étanchéité à l'air procurée par les joints de bâti intérieur et extérieur 38I, 38E et à l'aspiration, les orifices de bâti 32 se trouvant dans le volume VB délimité par la surface libre 20L et la surface de réception 36R et le joint de bâti intérieur 38I, sont isolés par rapport à l'environnement extérieur, ou milieu extérieur ME. Ainsi, les orifices de bâti 32 ne peuvent être confondus avec un défaut d'intégrité du joint d'étanchéité formé par le joint de colle 28 lors d'un contrôle de l'intégrité de celui-ci.

De la même façon, de manière à isoler les orifices de peau 30 de la peau 22 par rapport au milieu extérieur ME, le dispositif de contrôle 34 comprend au moins un couvercle à dépression 46 amovible délimité par deux surfaces libres opposées, dites surface interne de couvercle 46I et surface externe de couvercle 46E.

La surface interne de couvercle 46I est munie de deux joints d'étanchéité à contour fermé, dits respectivement joints de couvercle intérieur 48I et extérieur 48E. De préférence, les joints de couvercle intérieur 48I et extérieur 48E sont disposés dans des rainures pratiquées dans la surface interne du couvercle 46I, de sorte à faire saillie à partir de la surface interne du couvercle 46I. Avantageusement, les joints de couvercle 48I, 48E sont des joints à double lèvre.

Comme représenté aux figures 4 et 5, le contour du joint de couvercle intérieur 48I est contenu, c'est-à-dire inscrit, dans celui du joint de couvercle extérieur 48E. Dans l'exemple particulier de la figure 5, le joint de couvercle extérieur 48E à un contour de forme sensiblement rectangulaire, tandis que le joint de couvercle intérieur 48Ia un contour polygonal, dont les dimensions sont inférieures à celles du joint de couvercle extérieur 48E.

Il est cependant à noter que les contours des joints de couvercle extérieur 48E et intérieur 48I peuvent prendre une grande variété de formes telles que des formes circulaires, ovales, carrées, etc. du moment que le contour du joint de couvercle intérieur 48I est inscrit dans celui du joint de couvercle extérieur 48E.

De cette manière, le volume de couvercle VC délimité par la surface interne de couvercle 6I, la surface externe 22 de la peau et le joint de couvercle intérieur 48I, dans lequel se trouve l'orifice de peau 30, est isolé du milieu extérieur ME.

Le couvercle 46 est muni d'au moins d'un conduit d'aspiration 50 débouchant (ici, deux, comme on peut le voir sur la figure 5, mais un peut suffire), d'une part, entre les deux joints de couvercle 48I, 48E du côté de la surface interne de couvercle 46I et, d'autre part, du côté de la surface externe 46E de couvercle, c'est-à-dire dans le volume VJC d'aspiration du joint de couvercle délimité par les joints de couvercle intérieur 48I, la surface extérieure de la peau 22 et le couvercle 36. Le conduit d'aspiration 50 peut être un conduit percé dans le couvercle 46 débouchant de part en part. De façon alternative, il peut s'agir d'un tuyau inséré dans un conduit percé dans le couvercle 52.

Des moyens d'aspiration d'air 52 sont reliés au conduit d'aspiration 50. Là encore, les moyens d'aspiration 52 d'air étant connus en soi, ils ne seront pas décrits ici. Il peut notamment s'agir de moyens d'aspirations d'air 52 similaires aux moyens d'aspiration du bâti 42, voire même être les mêmes.

Le dispositif de contrôle 34 comprend également un dispositif d'émission 54 d'ondes sonores, telles que des ultrasons, destiné à émettre des ondes sonores de sorte qu'elles se propagent à l'intérieur du volume VP compris entre la partie inférieure 20 du caisson de hayon et la peau 22. Un tel dispositif d'émission 54 étant connus en soi, ils ne seront pas décrits ici.

Le dispositif d'émission 54 est par exemple, une fois la partie inférieure du caisson 20 placée sur le bâti, comme on peut le voir à la figure 4, disposé entre le bâti 36 et la partie inférieure du caisson 20, à l'intérieur du contour du joint intérieur de bâti 38I, c'est-à-dire dans le volume VB de bâti. De cette manière, les orifices de caisson 32 sont traversés par les ultrasons pour se propager dans le volume VP. La disposition du dispositif d'émission 54 de façon fixe par rapport au bâti 36 permet en effet de faciliter la gamme opératoire dans le cadre d'un contrôle en conditions de production industrielle.

Dans une variante non représentée sur les figures, le dispositif d'émission 54 est disposé entre la peau de carrosserie 22 et la partie inférieure du caisson 20, autrement dit dans le volume VP. Ceci a pour avantage de limiter les réverbérations des ondes sonores qui peuvent ainsi être dirigées plus directement vers les éventuels défauts d'étanchéité. On pourra également, dans encore d'autres variantes non représentées, disposer le dispositif d'émission 54 entre un couvercle 46 et la peau 22, ou à l'entrée d'un orifice de caisson 32.

Le dispositif de contrôle 34 comprend en outre un dispositif de détection 56 des ondes sonores émises par le dispositif d'émission 54, disposé dans le milieu extérieur ME situé à l'extérieur de l'ensemble 26. Dans le cas où le dispositif d'émission 54 émet des ondes sonores, comme représenté à la figure 4, le dispositif de détection 56 est un microphone, par exemple sensible aux ultrasons.

On va maintenant décrire un procédé de contrôle de l'intégrité du joint d'étanchéité 28 reliant la partie inférieure du caisson 20 de hayon et la peau 22, mis en œuvre au moyen du dispositif de contrôle 34 décrit ci-dessus.

Au cours d'une première étape, on pose la partie inférieure du caisson 20 de hayon sur le bâti de maintien 36 de sorte que les joints de bâti 38I, 38E sont en contact avec la surface libre 20L de la partie inférieure du caisson 20 de hayon. En particulier, on s'assure que le joint de bâti intérieur 38I entoure l'orifice de caisson 32, de sorte que sa projection orthogonale sur la surface de réception 36R soit contenue dans le contour du joint de bâti intérieur 38I.

Puis, on pose le ou les couvercles 46 sur la peau 22 de sorte qu'ils recouvrent tous les orifices de peau 30 et que les joints de couvercle 36I, 36E sont au contact de la peau 22. Selon les dimensions et formes choisies pour les couvercles 46, un couvercle 46 pourra isoler ainsi un ou plusieurs orifices de peau 30.

On aspire ensuite l'air contenu dans les volumes VJB et VJC respectivement par le conduit d'aspiration du bâti 40 et par le conduit d'aspiration du couvercle 50, respectivement à l'aide des moyens d'aspiration 42 et 52, et ce pour tous les couvercles 46 en place.

Tous les orifices 30, 32 de l'ensemble 26 formé par la partie inférieure du caisson 20 et la peau 22 étant ainsi isolés par le plaquage étanche des couvercles 46 sur la peau 22 d'une part, et la disposition de la partie inférieure du caisson 20 sur le bâti 36 d'autre part, on met en marche le dispositif d'émission 54 d'ondes sonores.

Le trajet des ondes sonores est représenté à la figure 4 par des pointillés. Comme illustré sur cette figure, on voit que grâce aux joints de bâti 38I, 38E et de couvercle 46I, 46E qui isolent respectivement les orifices 30, 32 du milieu extérieur ME, les ondes sonores ne peuvent sortir de l'ensemble 26 formé par la partie du caisson 20 et la peau 22 que par le joint de colle 28 dont on souhaite tester l'intégrité. On peut ainsi détecter une éventuelle fuite 58 représentée par une flèche en trait mixte.

Enfin, on détecte les ondes sonores émises par le dispositif d'émission 54 à l'aide du dispositif de détection 56. Dans le cas où le dispositif de détection 56 est un microphone 56, un opérateur pourra passer le microphone 56 le long du joint de colle 28 pour procéder à l'éventuelle détection de fuite 58.

L'invention n'est pas limitée aux modes de réalisation présentés et d'autres modes de réalisation apparaîtront clairement à l'homme du métier. On pourra notamment placer la peau de carrosserie sur le bâti, les orifices de caisson étant alors recouverts par les couvercles.

Par ailleurs, il est possible d'utiliser le dispositif de contrôle de l'intégrité d'un joint d'étanchéité pour contrôler l'étanchéité d'autres panneaux de carrosserie, notamment l'ensemble formé par la partie supérieure du hayon et un becquet (peau de carrosserie recouvrant la partie supérieur de la peau).

### Liste des références

- 8 :: Panneau de carrosserie
- 10 :: Caisson de véhicule automobile
- 14 :: Traverse supérieure du hayon
- 16 :: Ouverture de lunette du hayon
- 18 :: Lunette
- 20 :: Partie inférieure du caisson
- 20L :: Surface libre du caisson
- 22 :: Peau de carrosserie
- 26 :: Ensemble formé par la partie inférieure du caisson et la peau
- 24 :: Montants latéraux du hayon
- 28 :: Joint de colle
- 30 :: Orifice de peau
- 32 :: Orifices de caisson
- 34 :: Dispositif de contrôle de l'intégrité du joint d'étanchéité
- 36 :: Bâti de maintien
- 36R :: Surface de réception du bâti
- 36E :: Surface externe du bâti
- 38I :: Joint intérieur de bâti
- 38E :: Joint extérieur de bâti
- 40 :: Conduit d'aspiration du bâti
- 42 :: Moyens d'aspiration du bâti
- 46 :: Couvercle à dépression
- 46I :: Surface interne de couvercle
- 46E :: Surface externe de couvercle
- 48I :: Joint intérieur de couvercle
- 48E :: Joint extérieur de couvercle
- 50 :: Conduit d'aspiration du couvercle
- 52 :: Dispositif d'aspiration du couvercle
- 54 :: Dispositif d'émission
- 56 :: Dispositif de détection
- 58 :: Fuite
- ME :: Milieu extérieur
- VB :: Volume de bâti
- VC :: Volume de couvercle
- VJB :: Volume d'aspiration du joint de bâti
- VJC :: Volume d'aspiration du joint de couvercle
- VP :: Volume compris entre la partie inférieure du caisson et la peau

## Revendications

1. Dispositif de contrôle (34) de l'étanchéité d'un joint de colle (28) disposé entre une partie d'un caisson de carrosserie (20) et une peau de carrosserie (22), la peau de carrosserie (22) ou la partie du caisson (20) étant pourvue d'au moins un orifice traversant (30), dit orifice de peau (30) ou, respectivement, orifice de caisson (32),
**caractérisé en ce qu'il** comprend au moins un couvercle (46) à dépression destiné à recouvrir ledit au moins un orifice de peau (30) ou, respectivement, ledit au moins un orifice de caisson (32), délimité par deux surfaces libres opposées, dites surface interne de couvercle (46I) et surface externe de couvercle (46E), la surface interne de couvercle (46I) étant munie de deux joints d'étanchéité à contour fermé, dits respectivement joints de couvercle intérieur (48I) et extérieur (48E), le contour du joint de couvercle intérieur (48I) étant contenu dans celui du joint de couvercle extérieur (48E), le couvercle (46) étant traversé par au moins un conduit d'aspiration (50) du couvercle débouchant, d'une part, entre les deux joints de couvercle (48I, 48E) du côté de la surface interne (46I) de couvercle et, d'autre part, du côté de la surface externe (46E) de couvercle.

2. Dispositif de contrôle (34) selon la revendication 1, comprenant en outre un dispositif d'aspiration d'air (52) relié au conduit d'aspiration (50) du couvercle (46).

3. Dispositif de contrôle (34) selon la revendication 1 ou 2, comprenant en outre :
- un dispositif d'émission (54) d'ondes sonores, telles que des ultrasons, configuré de sorte que les ondes sonores peuvent se propager dans un volume (VP) situé entre la partie du caisson de carrosserie (20) et la peau de carrosserie (22) ; et
- un dispositif de détection (56) des ondes sonores émises par le dispositif d'émission (54), destiné à être disposés à l'extérieur de l'ensemble (26) formé par la peau de carrosserie (22) et la partie du caisson de carrosserie (20).

4. Dispositif de contrôle (34) selon l'une quelconque des revendications précédentes, comprenant en outre un bâti de maintien (36) destiné à accueillir la peau de carrosserie (22) ou la partie du caisson de carrosserie (20) sur une de ses surfaces libres, dite surface de réception (36R).

5. Dispositif de contrôle (34) selon la revendication 4, dans lequel le bâti (36) comprenant en outre une surface libre opposée à la surface de réception, dite surface externe (36E), la surface de réception (36R) est munie de deux joints d'étanchéité à contour fermé, dits respectivement joints de bâti intérieur (38I) et extérieur (38E), le contour du joint de bâti intérieur (38I) étant contenu dans celui du joint de bâti extérieur (38E), le bâti (36) étant traversé par au moins un conduit d'aspiration du bâti (40) débouchant, d'une part, entre les deux joints de bâti (38I, 38E) du côté de la surface de réception du bâti (36R) et, d'autre part, du côté de la surface externe (36E) du bâti, le conduit d'aspiration du bâti (40) étant en outre relié à un dispositif d'aspiration d'air (42) .

6. Dispositif de contrôle (34) selon la revendication 5, dans lequel, la partie de caisson de carrosserie (20) étant pourvue d'au moins un orifice traversant (32), les joints de bâti intérieur (38I) et extérieur (38E) sont configurés de sorte qu'une fois la partie du caisson de carrosserie (20) ou la peau de carrosserie (22) placée sur la surface de réception du bâti (36R), le joint de bâti intérieur (38I) entoure l'orifice traversant (32) de sorte que sa projection orthogonale sur la surface de réception (36R) est contenue dans le contour du joint de bâti intérieur (38I).

7. Dispositif de contrôle (34) selon l'une quelconque des revendications précédentes, dans lequel les joints de couvercle (48I, 48E) et/ou de bâti (38I, 38E) sont des joints à double lèvre.

8. Procédé de contrôle de l'intégrité d'un joint d'étanchéité reliant un caisson de carrosserie et une peau de carrosserie, **caractérisé en ce qu'il** est mis en œuvre au moyen du dispositif de contrôle (34) selon l'une quelconque des revendications précédentes.

9. Procédé de contrôle selon la revendication 8, comprenant les étapes suivantes :
- pose du couvercle (46) sur la peau de carrosserie (22) ou la partie du caisson (20) sorte qu'il recouvre ledit au moins un orifice de peau (30), ou, respectivement, ledit au moins un orifice de caisson (32) et que les joints de couvercle (48I, 48E) sont au contact de la peau de carrosserie (22) ou, respectivement, de la partie du caisson (20),
- aspiration de l'air débouchant dans le conduit d'aspiration (50) du couvercle à l'aide du dispositif d'aspiration (52).

10. Procédé de contrôle selon les revendications 3 et 9, comprenant les étapes suivantes :
- émission d'ondes sonores à l'aide du dispositif d'émission (54) ;
- détection des ondes sonores émises par le dispositif d'émission (56) à l'aide un dispositif de détection.

11. Procédé de contrôle d'étanchéité en utilisant un dispositif selon la revendication 5 et selon l'une quelconque des revendications 8 à 10, comprenant les étapes suivantes :
- pose de la partie du caisson de carrosserie (20) ou de la peau de carrosserie (22) sur le bâti de maintien (36) de sorte que les joints de bâti (38I, 38E) sont en contact avec une surface libre (20L) de la partie du caisson de carrosserie ou, respectivement, de la peau de carrosserie (22);
- aspiration de l'air débouchant dans le conduit d'aspiration du bâti (40) à l'aide des moyens d'aspiration du bâti (42).

## Patentansprüche

1. Vorrichtung (34) zur Kontrolle der Dichtheit einer Klebstoffdichtung (28), die zwischen einem Teil eines Karosseriekastens (20) und einer Karosseriehaut (22) angeordnet ist, wobei die Karosseriehaut (22) oder der Teil des Kastens (20) mit mindestens einer durchgehenden Öffnung (30) versehen ist, die als Hautöffnung (30) bzw. als Kastenöffnung (32) bezeichnet wird,
**dadurch gekennzeichnet, dass** sie mindestens einen Unterdruckdeckel (46) aufweist, der dazu bestimmt ist, die mindestens eine Hautöffnung (30) bzw. die mindestens eine Kastenöffnung (32) zu bedecken, und der von zwei gegenüberliegenden freien Flächen begrenzt wird, die als Deckelinnenfläche (46I) und Deckelaußenfläche (46E) bezeichnet werden, wobei die Deckelinnenfläche (46I) mit zwei Dichtungen mit geschlossener Kontur versehen ist, die jeweils innere Deckeldichtung (48I) und äußere Deckeldichtung (48E) genannt werden, wobei die Kontur der inneren Deckeldichtung (48I) in der Kontur der äußeren Deckeldichtung (48E) enthalten ist, wobei der Deckel (46) von mindestens einem Ansaugkanal (50) des Deckels durchquert wird, der einerseits zwischen den beiden Deckeldichtungen (48I, 48E) auf der Seite der inneren Deckeloberfläche (46I) und andererseits auf der Seite der äußeren Deckeloberfläche (46E) mündet.

2. Kontrollvorrichtung (34) nach Anspruch 1, die ferner eine Luftansaugvorrichtung (52) aufweist, die mit dem Ansaugkanal (50) des Deckels (46) verbunden ist.

3. Kontrollvorrichtung (34) nach Anspruch 1 oder 2, ferner aufweisend:
- eine Sendevorrichtung (54) für Schallwellen, wie Ultraschall, die so konfiguriert ist, dass sich die Schallwellen in einem Volumen (VP) ausbreiten können, das sich zwischen dem Teil des Karosseriekastens (20) und der Karosseriehaut (22) befindet; und
- eine Vorrichtung (56) zum Erfassen der von der Sendevorrichtung (54) ausgesendeten Schallwellen, die dazu bestimmt ist, außerhalb der von der Karosseriehaut (22) und dem Teil des Karosseriekastens (20) gebildeten Einheit (26) angeordnet zu werden.

4. Kontrollvorrichtung (34) nach einem der vorhergehenden Ansprüche, die ferner ein Haltegestell (36) zur Aufnahme der Karosseriehaut (22) oder des Teils des Karosseriekastens (20) auf einer ihrer freien Flächen, die als Aufnahmefläche (36H) bezeichnet wird, aufweist.

5. Kontrollvorrichtung (34) nach Anspruch 4, bei der das Gestell (36) ferner eine der Aufnahmefläche gegenüberliegende freie Fläche, die als Außenfläche (36E) bezeichnet wird, aufweist, die Aufnahmefläche (36R) mit zwei Dichtungen mit geschlossener Kontur, innere Gestelldichtung (38I) bzw. äußere Gestelldichtung (38E) genannt, versehen ist, wobei die Kontur der inneren Gestelldichtung (38I) in derjenigen der äußeren Gestelldichtung (38E) enthalten ist, das Gestell (36) von mindestens einem Gestellansaugkanal (40) durchquert wird, der einerseits zwischen den beiden Gestelldichtungen (38I, 38E) auf der Seite der Aufnahmefläche des Gestells (36R) und andererseits auf der Seite der Außenfläche (36E) des Gestells mündet, wobei der Gestellansaugkanal (40) ferner mit einer Luftansaugvorrichtung (42) verbunden ist.

6. Kontrollvorrichtung (34) nach Anspruch 5, wobei, da der Karosseriekastenteil (20) mit mindestens einer Durchgangsöffnung (32) versehen ist, die innere (38I) und die äußere (38E) Gestelldichtung so konfiguriert sind, dass, sobald der Karosseriekastenteil (20) oder die Karosseriehaut (22) auf der Gestellaufnahmefläche (36R) platziert ist, die innere (38I) und die äußere (38E) Gestelldichtung so konfiguriert sind, dass, sobald der Karosseriekastenteil (20) oder die Karosseriehaut (22) auf der Gestellaufnahmefläche (36R) platziert ist, die innere Gestelldichtung (38I) die Durchgangsöffnung (32) so umgibt, dass ihre orthogonale Projektion auf die Aufnahmefläche (36R) innerhalb der Kontur der inneren Gestelldichtung (38I) enthalten ist.

7. Kontrollvorrichtung (34) nach einem der vorhergehenden Ansprüche, wobei die Deckel- (48I, 48E) und/oder Gestelldichtungen (38I, 38E) Doppellippendichtungen sind.

8. Verfahren zum Kontrollieren der Integrität einer Dichtung, die einen Karosseriekasten und eine Karosseriehaut verbindet, **dadurch gekennzeichnet, dass** es mit Hilfe der Kontrollvorrichtung (34) nach einem der vorhergehenden Ansprüche durchgeführt wird.

9. Kontrollverfahren nach Anspruch 8, das die folgenden Schritte aufweist:
- Aufsetzen des Deckels (46) auf die Karosseriehaut (22) oder den Kastenteil (20), so dass er die mindestens eine Hautöffnung (30) bzw. die mindestens eine Kastenöffnung (32) abdeckt und die Deckeldichtungen (48I, 48E) die Karosseriehaut (22) bzw. den Kastenteil (20) berühren,
- Ansaugen der in den Ansaugkanal (50) des Deckels mündenden Luft mit Hilfe der Ansaugvorrichtung (52).

10. Kontrollverfahren nach den Ansprüchen 8 und 9, aufweisend die folgenden Schritte:
- Aussenden von Schallwellen mit Hilfe der Sendevorrichtung (54);
- Erfassen der von der Sendevorrichtung (56) ausgesendeten Schallwellen mithilfe einer Erfassungsvorrichtung.

11. Verfahren zur Dichtheitskontrolle unter Verwendung einer Vorrichtung nach Anspruch 5 und nach einem der Ansprüche 8 bis 10, aufweisend die folgenden Schritte:
- Aufsetzen des Karosseriekastenteils (20) oder der Karosseriehaut (22) auf das Haltegestell (36), so dass die Gestelldichtungen (38I, 38E) mit einer freien Oberfläche (20L) des Karosseriekastenteils bzw. der Karosseriehaut (22) in Kontakt sind;
- Ansaugen von Luft, die in den Gestellansaugkanal (40) mündet, mit Hilfe der Gestellansaugeinrichtung (42).

## Claims

1. Device for controlling (34) the tightness of a glue joint (28) arranged between a part of a bodywork box (20) and a body skin (22), the bodywork skin (22) or part of the box (20) being provided with at least one through orifice (30), known as a skin orifice (30) or, respectively, box orifice (32),
**characterized in that it** comprises at least one vacuum cover (46) intended to cover said at least one skin orifice (30) or, respectively, said at least one box orifice (32), delimited by two opposite free surfaces, known as the inner lid surface (46I) and the outer lid surface (46E), the inner surface of the lid (46I) being fitted with two closed-contour gaskets, known as inner (48I) and outer (48E) lid gaskets respectively, the contour of the inner cover gasket (48I) being contained **in that** of the outer cover gasket (48E), at least one suction duct (50) of the lid opening, on the one hand, between the two lid gaskets (48I, 48E) on the side of the inner surface (46I) of the lid and, on the other hand, on the side of the external surface (46E) of lid going through the cover (46).

2. Control device (34) according to claim 1, further comprising an air suction device (52) connected to the suction duct (50) of the cover (46).

3. Control device (34) according to claim 1 or 2, further comprising:
- a device for emitting (54) sound waves, such as ultrasound, configured such that the sound waves can propagate in a volume (VP) located between the part of the bodywork box (20) and the bodywork skin (22);
- a device for detecting (56) the sound waves emitted by the emission device (54), intended to be placed outside the assembly (26) formed by the bodywork skin (22) and the part of the bodywork box (20).

4. Control device (34) according to any one of the preceding claims, further comprising a holding frame (36) intended to accommodate the body skin (22) or the part of the bodywork box (20) on one of its free surfaces, known as the receiving surface (36R).

5. Control device (34) according to claim 4, wherein the frame (36) further comprises a free surface opposite the receiving surface, said external surface (36E), the receiving surface (36R) being provided with two closed contour gaskets, respectively known as inner (38I) and outer (38E) frame gaskets, the contour of the inner frame gasket (38I) being contained in that of the outer frame gasket (38E), at least one suction duct of the frame (40) opening, on the one hand, between the two joints of the frame (38I, 38E) on the side of the receiving surface of the frame (36R) and, on the other hand, on the side of the external surface (36E) of the frame, going through the frame (36), the suction duct of the frame (40) being also connected to an air suction device (42) .

6. Control device (34) according to claim 5, wherein, the part of the bodywork box (20) being provided with at least one through orifice (32), the inner (38I) and outer (38E) frame gaskets are configured such that once the part of the bodywork box (20) or the body skin (22) is placed on the receiving surface of the frame (36R), the inner frame joint (38I) surrounds the through orifice (32) such that its orthogonal projection on the receiving surface (36R) is contained in the contour of the inner frame joint (38I).

7. Control device (34) according to any one of the preceding claims, wherein the lid gasket(48I, 48E) and/or frame (38I, 38E) gaskets are double-lip gaskets.

8. A method for controlling the integrity of a gasket connecting a bodywork box and a bodywork skin, **characterized in that it** is implemented by means of the control device (34) according to any one of the preceding claims.

9. Control method according to claim 8, comprising the following steps:
- installing the lid (46) on the bodywork skin (22) or the part of the box (20) such that it covers said at least one skin orifice (30), or, respectively, said at least one box orifice (32) and that the lid gaskets (48I, 48E) are in contact with the body skin (22) or, respectively, from the part of the box (20),
- sucking the air flowing into the suction duct (50) of the cover using the suction device (52).

10. Control method according to claims 3 and 9, comprising the following steps:
- emitting sound waves using the emission device (54); - detecting sound waves emitted by the emission device (56) using a detection device.

11. A method of tightness control using a device according to claim 5 and according to any one of claims 8 to 10, comprising the following steps:
- installing the part of the bodywork box (20) or the bodywork skin (22) on the holding frame (36) such that the frame joints (38I, 38E) are in contact with a free surface (20L) of the part of the body box or, respectively, the body skin (22);
- sucking the air flowing into the suction duct of the frame (40) using the suction means of the frame (42).
